# EUROPEAN PATENT SPECIFICATION

(11) **EP 3 733 614 B1**
(45) Date of publication and mention of the grant of the patent: **23.03.2022**
(21) Application number: 19305547.2
(22) Date of filing: 30.04.2019
(51) Int. Cl.: C02F 1/78, C02F 3/26

(54) **OFFGAS REUSE**
ABGASRÜCKFÜHRUNG
RÉUTILISATION DE GAZ D'ÉVENT

(43) Date of publication of application: 04.11.2020
(73) Proprietor: SUEZ Groupe, 92040 Paris la Défense Cedex (FR)
(72) Inventor: De Franceschi, Laurent, 68700 CERNAY (FR); Uttinger, Walter, 8405 WINTERTHUR (CH); Carrand, Gilles, 78500 SARTROUVILLE (FR)
(74) Representative: IPAZ

(56) References cited:
- WO-A1-2013/000115
- US-A- 4 132 637
- US-A- 4 256 574

## Description

### TECHNICAL FIELD

The present invention relates to the field of water treatment. It can relate to the field of wastewater treatment using an ozonized gas comprising at least ozone. It can also relate to the field of drinking water production using an ozonized gas comprising at least ozone. More specifically the invention relates to a method for supplying oxygen to at least one aeration tank of a water treatment system and to a water treatment system comprising at least one aeration tank, wherein a vent gas from an ozonation tank is supplied to the at least one aeration tank.

### TECHNICAL BACKGROUND

It is known from the prior art documents US4256574, WO2013/000115 and US4132637 the recycling of an offgas outputted from an ozonising tank or ozonation tank of a wastewater treatment system. In the prior art documents, the ozonation tank (or ozone contact tank) is used to treat liquid effluents thanks to ozone gas supplied from an ozone generator. The ozone generator is supplied with an oxygen enriched gas and generates ozone, outputted to the ozonation tank. The offgas outputted from the ozonation tank is sent into an oxygenation tank (or aeration tank) to treat therein liquid effluents by biological oxidation. The treatment of liquid effluents (or waste water) is performed in several steps in the aeration tank and in the ozonation tank.

The disadvantages of the wastewater treatment disclosed by these documents is that there is no consideration for the savings of operational expenditures such as energy and oxygen, by recycling (or reusing) the oxygen comprised in the offgas (or vent gas) of the ozonation tank in order to aerate the aeration tank, while adapting the recycling to the biology of the aeration tank so as to not affect the biological behavior in the aeration tank and so as to optimize the biological behavior according to the pollutants inside the aeration tank to be treated.

### SUMMARY OF THE INVENTION

The present invention aims to address the above mentioned drawback of the prior art, and to provide in a first aspect a method, as defined in claim 1, for supplying oxygen to at least one aeration tank of a water treatment system, comprising:
- a step of injecting a gas comprising ozone into an ozonation tank,
- a step of collecting a vent gas from the ozonation tank,
- a step of measuring an ozone content in the vent gas, and
- a step of comparing the measured ozone content to an ozone content threshold, and of:
- supplying the at least one aeration tank directly with the vent gas if the measured ozone content is below the ozone content threshold, or
- treating the vent gas so as to decrease its ozone content, if the measured ozone content is equal or above the ozone content threshold, and supplying the at least one aeration tank with the treated gas.

In other words, the first aspect relates to a method for supplying oxygen to at least one aeration tank of a water treatment system, wherein
- the water treatment system comprising:
   - an ozone generating unit, for generating a gas comprising at least ozone,
   - an ozonation tank supplied with the gas generated by the ozone generating unit, the ozonation tank being arranged to output a vent gas comprising oxygen,
   - at least one aeration tank,
   - a supply line arranged between the ozonation tank and the at least one aeration tank for supplying the vent gas to the at least one aeration tank,
   - at least one set of sensors, comprising at least one ozone sensor arranged between the ozonation tank and the at least one aeration tank, in order to measure an ozone content in the vent gas.
   - the method comprising:
   - a first step of measuring an ozone content in the vent gas to be supplied to the at least one aeration tank by the supply line, with the at least one ozone sensor, and
   - a second step of comparing the measured ozone content to an ozone content threshold, and of :
      - supplying the at least one aeration tank directly with the vent gas if the measured ozone content is below the ozone content threshold, or
      - treating the vent gas so as to decrease its ozone content, if the measured ozone content is equal or above the ozone content threshold, and supplying the at least one aeration tank with the treated gas.

Since the ozone content of the vent gas to be supplied to the aeration tank is controlled and can be adjusted during operation of the water treatment system or water treatment plant, the biological aspect of the aeration tank is taken into account. This also allows also to decrease the ozone content in the offgas or vent gas outputted from the ozonising or ozonation tank, in order to limit the impact on the biological behaviour of the aeration tank. This is performed while recycling the offgas, in an efficient manner for the water treatment operation and costs, depending on the content or concentration of ozone in the offgas.

The step of treating the vent gas from the supply line so as to decrease its ozone content is realized by destructing ozone into the vent gas. Destruction of ozone is preferably full, but may but also partial. It may also be realized through dilution of the vent gas, with another gas such as oxygen for example. The ozone generator is supplied with at least oxygen and generates a gas comprising ozone. The gas generated by the ozone generator may also comprise oxygen as the conversion ratio from oxygen to ozone of the ozone generator may not be of 100%. The ozonation tank is supplied with the gas generated by (or received from) the ozone generating unit, for treating the water (or waste water) with ozone. The vent gas (or offgas) is the gas generated by the ozonation tank at the output thereof. The ozonation tank is arranged to output the vent gas comprising oxygen, that is to say that ozonation tank comprises, as an example, a (tight) cover on top of it and a flange on the cover to collect the gas outputted by the ozonation tank. In other words, the ozonation tank is the seat of a treatment for the ozonation of water therein and this ozonation leads to the output of gas comprising at least oxygen. This is oxygen may come from the ozonation treatment itself, or from an excess of oxygen from the ozone generating unit and not (fully) consumed by the ozonation tank, from the oxygen already present in the ozonation tank, from the water to be treated or from any other source.

Destruction of ozone can be performed by a Vent Ozone Destruction unit (VOD) or Ozone Destruction Unit. It may be a thermal destructor or a chemical destructor or a catalytic destructor of ozone or any suitable destructor or combination thereof. The thermal destructor may require up to one hour for starting or reaching nominal destruction. The catalytic destructor may be operational in a short delay such as few seconds, or one of few minutes.

The at least one ozone sensor is arranged to measure ozone content into the vent gas.

The supply line for supplying gas comprising oxygen to the aeration tank comprises at least:
- an ozone generating unit supplied with oxygen, for supplying gas comprising oxygen and ozone,
- an ozonation tank supplied with gas from the ozone generating unit. This is an alternative definition of the supply line.

The ozonation tank is supplied with gas from the ozone generating unit and outputting gas comprising oxygen and ozone. That is to say that the ozonation tank output vent gas comprising ozone, in the case where the ozonation treatment in the ozonation tank is not fully consuming the ozone generated by the ozone generating unit. In this case, the vent gas comprise ozone. The vent gas may also comprise ozone in case of leak of ozone, or for any other reason.

The method further comprises the step of supplying the aeration tank with the treated gas.

This allows to adjust the vent gas composition before supplying the aeration tank, while recycling the vent gas in a efficient manner for the water treatment, without sending high quantities of ozone in the aeration tank.

The water treatment system further comprises:
- an ozone destruction unit, for destructing ozone in the vent gas,
- advantageously, a by-pass module arranged to bypass the ozone destruction unit, in particular the by-pass module is arranged downstream the ozonation tank and upstream the aeration tank or in parallel to the ozone destruction unit.

Advantageously, the method further comprises :
- a step of bypassing the ozone destruction unit for destructing ozone in the vent gas if the measured ozone content is below the ozone content threshold, or
- a step of passing the vent gas through the ozone destruction unit if the measured ozone content is equal or above the ozone content threshold.

In other words, the method further comprises:
- a step wherein the gas received from the ozonation tank bypasses the ozone destruction unit if the measured ozone content is below the ozone content threshold, or
- a step wherein the gas received from the ozonation tank passes through the ozone destruction unit if the measured ozone content is equal or above the ozone content threshold, and
- supplying the gas passed through the by-pass module to the aeration tank.

This allows to by-pass the function of destructing or reducing the content of ozone in the vent gas in an efficient manner, so as to better control the supply of oxygen to the aeration tank.

The by-pass function can be performed by redirecting the vent gas through a set of valves arranged on the inlet and outlet ports of the ozone destruction unit, or by switching on and off the ozone destruction unit to adjust the amount of ozone in the vent gas. The set of valves may comprise one valve arranged upstream the ozone destruction unit, one valve arranged downstream the ozone destruction unit and one valve arranged in parallel to the ozone destruction unit. This by-pass function may take into consideration the ramping curve or the necessary time to reach nominal value or nominal cruise destruction speed of the ozone destruction unit.

Advantageously, the method comprises a step corresponding to the verification whether the ozonation tank is being supplied with a gas or not, meaning verifying if the ozonation tank is currently treating water with ozone received from the ozone generating unit.

Preferably, the step of verification whether the ozonation tank is being supplied with gas or not is performed as an initial step, or as an initial step of a cycle in cases wherein a series of steps (forming a loop) is performed and repeated.

This allows to check the implementation's current status of the method for supplying oxygen to at least one aeration tank of the water treatment system.

Advantageously, the water treatment system further comprises :
- an aeration device, for supplying air comprising oxygen to the aeration tank,
- an oxygen line to supply the oxygen from an entry side of the ozone generating unit to the by-pass module, and
- at least one oxygen sensor.

Advantageously, the method further comprises :
- a step of measuring the oxygen concentration in the vent gas,
- a step of supplying oxygen from the entry side of the ozone generating unit to the by-pass module, if the measured oxygen concentration is below the oxygen concentration threshold, or
- a step of supplying air from the aeration device to the aeration tank, if the measured oxygen concentration is above the oxygen concentration threshold.

Advantageously, the step of measuring the oxygen concentration in the vent gas is performed with the at least one oxygen sensor.

Advantageously, the method further comprises:
- a step of comparing the measured oxygen concentration to an oxygen concentration threshold.

Advantageously, the oxygen concentration threshold is preferably 60% wt and more preferably 80% wt.

Advantageously, the method further comprises :
- a step of supplying oxygen from an oxygen source to the at least one aeration tank, if the measured oxygen concentration is below the oxygen concentration threshold, or
- a step of supplying air from the aeration device to the aeration tank, if the measured oxygen concentration is above the oxygen concentration threshold.

This allows to propose a method for supplying additional oxygen to the aeration tank, for a more efficient water treatment and, in particular to detect a (large) air leak in the collecting zone on the top cover of the ozonation tank. This also allows to directly supply the oxygen to the at least one aeration tank without using the by-pass module, in particular according to the arrangement of pipework of the water treatment system.

Advantageously, the ozone content threshold is preferably 2.5 % wt, and more preferably 1% wt.

This allows to provide a more efficient water treatment, and in particular to detect a bad transfer on the ozonation tank and/or a poor working of the ozone generating unit.

Advantageously, the ozone content threshold comprises an ozone mass content threshold which is preferably 2.5 % wt, more preferably 1 % wt, and/or an ozone mass flow content threshold.

This allows to carefully adjust the content of ozone in vent gas, so as to limit the impact on the biological behaviour of the aeration tank. This also allows to provide a more efficient water treatment, and in particular to detect a bad transfer on the ozonation tank and/or a bad working of the ozone generating unit. The piloting of the water treatment system can be performed thanks to two thresholds, one for the ozone mass content and one for the ozone mass flow. These threshold might be adjusted during the treatment, in relation to customer demand, such as quality of water to be treated, pollution of the water, kind or quantity of pollutants to be treated. For the ozone mass flow, it may be necessary to couple a mass flow sensor and an ozone concentration sensor for better precision.

Advantageously, the aeration tank comprises at least one dissolved oxygen sensor.

The dissolved oxygen content in the liquid into the aeration tank can be measured with the at least one dissolved oxygen sensor.

Advantageously, the method further comprises:
- a step of comparing the measured dissolved oxygen content to a dissolved oxygen threshold.

Advantageously, the method further comprises:
- a step of measuring a dissolved oxygen content in the liquid of the aeration tank, and
- a step of stopping the supply of the vent gas to the aeration tank if the measured dissolved oxygen content is above the dissolved oxygen threshold, or
- a step of treating the vent gas so as to decrease its ozone content, if the measured dissolved oxygen content is below the dissolved oxygen threshold, and supplying treated gas to the aeration tank.

This allows to adjust the composition of vent gas so as to better pilot the water treatment.

Advantageously, the method further comprises :
- a step of supplying vent gas from the by-pass module to the aeration tank if the measured dissolved oxygen content is below the dissolved oxygen threshold, and
- a step of supplying oxygen from the entry side of the ozone generating unit to the by-pass module, if the measured dissolved oxygen content is below the dissolved oxygen threshold, or
- a step of supplying air from the aeration device to the aeration tank, if the measured dissolved oxygen content is below the dissolved oxygen threshold.

This allows to adjust the composition of vent gas so as to better pilot the water treatment, while taking in account the dissolved oxygen in the aeration tank.

Advantageously, the dissolved oxygen threshold is preferably 6 mg/L during more than 2 hours, more preferably 5 mg/L during more than 2 days.

This allows to adjust the composition of vent gas while taking in account the inertia of the water treatment. In particular, this allows to consider the inertia due to the size of the aeration tank(s) or the inertia of the ozone destruction unit (such as ramp up or heating up after a stop, or the like).

Advantageously, the aeration tank further comprises at least one redox potential sensor or the set of sensors further comprise at least one redox potential sensor.

The redox potential of the liquid into the aeration tank can be measured with the redox potential sensor.

Advantageously, the method further comprises :
- a step of measuring a redox potential value in the liquid of the aeration tank.

Advantageously, the method further comprises:
- a step of comparing the measured redox potential value to a redox potential threshold.

Advantageously, the method further comprises:
- a step of stopping the supply of vent gas to the aeration tank if the measured redox potential value is above the redox potential threshold.

This allows to adjust the composition of the vent gas while taking into account the biological behaviour of the aeration tank, in particular by taking in account the redox potential of the liquid into the aeration tank.

Advantageously, the water treatment system further comprises at least one mass flow sensor.

The ozone mass flow can be measured with the mass flow sensor.

Advantageously, the method further comprises :
- a step of measuring the oxygen concentration in the gas received from the ozonation tank with the at least one oxygen sensor,

Advantageously, the method further comprises :
- a step of comparing the measured oxygen concentration to an oxygen threshold, which is preferably 60% wt and more preferably 80% wt,

Advantageously, the method further comprises :
- a step of measuring the mass flow of the gas received from the ozonation tank.

Advantageously, the method further comprises :
- a step of comparing the measured mass flow to a mass flow threshold.

Advantageously, the method further comprises :
- a step of supplying oxygen from the entry side of the ozone generating unit to the by-pass module, if the measured oxygen concentration is below the oxygen threshold and if the mass flow of gas received from the ozonation tank is above the mass flow threshold or the mass flow demand,
- a step of supplying air from the aeration device to the aeration tank, if the measured oxygen concentration is above the oxygen threshold.

Advantageously, the method further comprises:
- a step of supplying oxygen from the entry side of the ozone generating unit to the by-pass module, if the measured redox potential is below the redox potential threshold, and/or if an ammonia concentration of the liquid inside the aeration tank is below an ammonia threshold, and/or if an information of more aeration is required from the aeration tank, or
- a step of supplying air from the aeration device to the aeration tank, if the measured redox potential is below the redox potential threshold, and/or if the ammonia concentration of the liquid inside the aeration tank is below the ammonia threshold, and/or if the information of more aeration is required from the aeration tank.

This allows to adjust the supply of oxygen to the aeration tank in an efficient manner. The mass flow demand is an amount of oxygen asked or pulled by the client; depending of the water to be treated, the design of the water treatment system or the requisition of the customer. In other words, the demand may depend on biology, aeration tank volume, temperature, or any other suitable or relevant physical, biological or chemical parameters. Further, this allows to adjust the supply of oxygen to the aeration tank according to other parameters such as ammonia concentration, redox potential or aeration request or need form the aeration tank. The information of more aeration is required from the aeration tank may be issued by a SCADA (Supervisory Control & Data Acquisition), which is a general term meaning a HMI (Human Machine Interface) for the control and command system.

Advantageously, the method further comprises :
- a step of diverting the gas received from the ozonation tank to the atmosphere if the measured oxygen concentration is above the oxygen threshold and/or if the mass flow of gas received from the ozonation tank is above the mass flow threshold.

Advantageously, the method further comprises :
- a step of verification if the at least one aeration tank requires vent gas,
- a step of releasing the vent gas to the atmosphere, after passing the vent gas through the ozone destruction unit, if none of the at least one aeration tank requires vent gas.

This allows to avoid any injection of vent gas to the aeration tank if there is no need or requisition from the aeration tank functioning or treatment. In particular, the step of verification if the at least one aeration tank requires vent gas is done by measuring the dissolved oxygen content, the ammonia content, the nitrate content, the redox potential, applying delays, calculating average or integrated values, or verifying deviations.

A second aspect of the present invention is a water treatment system, as defined in claim 8, comprising:
- at least one aeration tank,
- at least one set of sensors, comprising at least one ozone sensor, in order to measure an ozone content in the vent gas,
- an ozone generating unit for generating a gas comprising at least ozone,
- an ozonation tank supplied with the gas generated by the ozone generating unit, the ozonation tank being arranged to output a vent gas,
- a supply line arranged between the ozonation tank and the at least one aeration tank, for supplying the vent gas to be supplied to the at least one aeration tank,
- an ozone destruction unit arranged on the supply line for treating the vent gas received from the ozonation tank,
- a control unit or a bypass module, as defined in claim 8.

An alternative definition of the supply line for supplying gas comprising oxygen to the aeration tank, is that the supply line comprises at least:
- an ozone generating unit supplied with oxygen, for supplying gas comprising oxygen and ozone,
- an ozonation tank supplied with gas from the ozone generating unit and outputting gas comprising oxygen and ozone,
- means for treating gas received from the ozonation tank.

This allows to propose an efficient water treatment, in order to implement the method according to the first aspect.

The ozonation tank is arranged downstream the ozone generating unit.

Advantageously, the water treatment system further comprises:
- a by-pass module arranged downstream the ozonation tank and upstream the at least one aeration tank or in parallel to the ozone destruction unit, and comprising :
- an ozone destruction unit, for destructing ozone in the vent gas before the supply to the at least one aeration tank.

This allows to propose the water treatment system equipped with the ozone destruction unit to efficiently destroy or reduce the content of ozone in vent gas.

The vent gas is collected and received from the ozonation tank, in particular thanks to a (tight) top cover on the ozonation and pipeworks.

The gas treating function or by-pass function can be performed by redirecting the vent gas through a set of valves arranged on the inlet and outlet ports of the ozone destruction unit, or by switching on and off the ozone destruction unit to adjust the amount of ozone in the vent gas.

Advantageously, the water treatment system further comprises a set of valves arranged to by-pass the ozone destruction unit.

The set of valves may comprise one valve arranged upstream the ozone destruction unit, one valve arranged downstream the ozone destruction unit and one valve arranged in parallel to the ozone destruction unit.

This allows to bypass efficiently the ozone destruction unit, in order to adjust the ozone content in vent gas.

Advantageously, the water treatment system further comprises a control unit, for implementing the method according to the first aspect.

Advantageously, the water treatment system further comprises an aeration device. The aeration device is arranged to supply the aeration tank with air comprising oxygen, with oxygen or with any other gas comprising at least oxygen. This can be performed with an oxygen bottle, air injector or compressor, or any suitable device.

This allows to adjust the oxygen content or concentration of the aeration tank in parallel of the vent gas reinjection.

Advantageously, the set of sensors further comprises at least:
- one oxygen sensor, or
- one dissolved oxygen sensor, or
- one redox potential sensor, or
- one mass flow sensor.

This allows to propose a water treatment system with a complete set of sensor to better pilot the water treatment system.

### BRIEF DESCRIPTION OF THE DRAWINGS

Other features and advantages of the present invention will appear more clearly from the following detailed description of particular non-limitative examples of the invention, illustrated by the appended drawings where:

- figure 1 represents a water treatment system according to the present invention and a method for supplying oxygen into an aeration tank of the water treatment system according to the present invention;

- figure 2 represents steps of the method for supplying oxygen into the aeration tank according to a second embodiment, in a continuous aeration mode;

- figure 3 represents steps of the method for supplying oxygen into the aeration tank according to a third embodiment, in a continuous aeration mode;

- figure 4 represents steps of the method for supplying oxygen into the aeration tank according to a fourth embodiment, in a intermittent aeration mode;

- figure 5 represents steps of the method for supplying oxygen into the aeration tank, according to a fifth embodiment in a intermittent aeration mode;

### DETAILLED DESCRIPTION

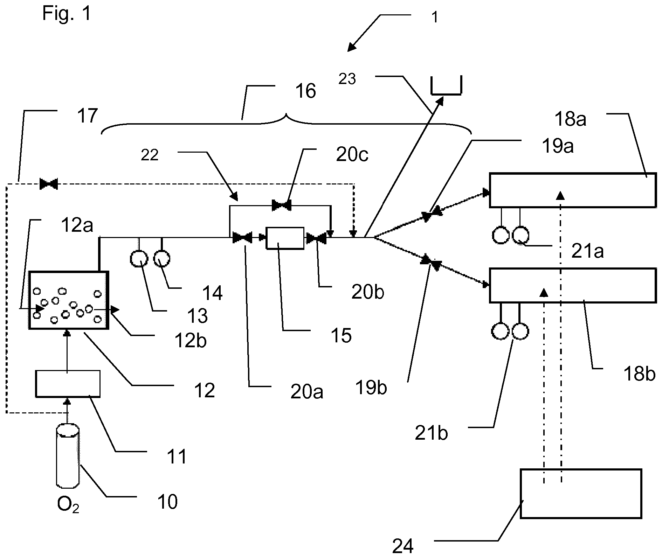

Figure 1 represents a water system and a method for supplying oxygen into an aeration tank of the water treatment system.

The water treatment system 1 comprises an ozone generating unit or ozone generating machine 11, an oxygen source 10, an ozonation tank 12, and a set of sensors comprising at least one ozone sensor 13, and one oxygen sensor 14, a vent gas destruction unit or ozone destruction unit 15, two aeration tanks 18a, 18b, a supply line 16 arranged between the ozonation tank 12 and the aeration tanks 18a, 18b for supplying a vent gas outputted from the ozonation tank 12 to be supplied to the aeration tanks 18a, 18b, a by-pass module 22, and a control unit to implement the method. The supply line 16 comprises a first portion connected with the first aeration tank 18a and a second portion connected with the second aeration tank 18b.

The ozone generating machine or ozone generator 11 comprises an inlet or input arranged to supply oxygen from a consumable source, such as oxygen bottles, an oxygen batch or the oxygen source 10, and an outlet or output arranged to exhaust a gas comprising ozone to be supplied to the ozonation tank 12.

The ozone generating unit 11 further comprises at least an electric unit, at least two electrodes separated by an ozonizing gap and a dielectric layer, and may further comprise an oxygen circulation pump. The oxygen is supplied from the inlet of the ozone generating unit 11 (by the oxygen circulation pump or by pressure of gas, or any other transport means) to the ozonizing gap, where electrical power in form of electrical discharges allowing corona effect is transforming the oxygen into ozone, circulated to the outlet of the ozone generating unit 11. As the efficiency of the ozone generating unit or ozone generating machine 11 is not of 100%, the gas outputted by the ozone generating unit 11 comprises at least oxygen and ozone.

The ozone generating unit 11 may further comprises a water cooling circuit arranged for cooling the electrodes.

In an embodiment, the electrodes are metallic, and the dielectric layer comprises a ceramic coating, applied onto at least one of the electrodes.

The gas outputted by the ozone generating unit 11 is injected to the ozonation tank 12, in order to treat water inside the ozonation tank 12.

The ozonation tank 12 comprises a reservoir or a retention tank to hold water to be treated, and water inlet 12a and water outlet 12b for the circulation of the water to be treated. The ozonation tank 12 further comprises a collector or a tight top cover in order to collect the vent gas outputted by the ozonation tank 12.

The vent gas is a vent gas or an emission gas issued from the ozonation tank 12 due to the treatment of the water. That is to say that the vent gas comprises gas rejection and comprises ozone and/or oxygen as the efficiency of the water treatment of the ozonation tank 12 is not of 100%.

In other words, the vent gas comprises ozone as the ozone injected in the ozonation tank 12 is not fully used or transformed by the water inside the ozonation tank 12, and comprises oxygen due to the fact that not all of part of oxygen is dissolved and also due to the chemical and biological reactions inside the ozonation tank 12 (or for other reasons) with the water.

The vent gas may also comprise other rejection gas.

The water treatment system 1 as previously explained comprises the ozone sensor 13, in order to measure an ozone content in the vent gas. The ozone sensor 13 is arranged between the ozonation tank 12 and the aeration tanks 18a, 18b, between the ozonation tank 12 and the ozone destruction unit 15.

The set of sensors of the water treatment system 1 further comprises an oxygen sensor 14, in order to measure an oxygen concentration in the vent gas. The oxygen sensor 14 is arranged between the ozonation tank 12 and the aeration tanks 18a, 18b, and preferably between the ozonation tank 12 and the ozone destruction unit 15.

The sensors are also suitable for measuring an ozone mass flow or an oxygen mass flow respectively. Alternatively, the water treatment system 1 further comprises an ozone mass flow sensor and an oxygen mass flow sensor, arranged to measure ozone mass flow and oxygen mass flow, respectively, in the vent gas.

The water treatment system 1 as previously explained comprises the vent gas ozone destruction unit or ozone destruction unit 15, which is arranged between the ozonation tank 12 and the aeration tanks 18a, 18b.

The supply line 16 is arranged between the ozonation tank 12 and the aeration tanks 18a, 18b for supplying the vent gas to be supplied to the aeration tanks 18a, 18b.

The ozone destruction unit 15 is supplied with the vent gas coming from the ozonation tank 12. The ozone destruction unit 15 decreases the ozone content of the vent gas by destructing the ozone. The ozone destruction unit 15 may be a thermal destructor, a chemical destructor or a catalytic destructor, or a combination thereof.

The by-pass module 22 is arranged to by-pass the destruction unit 15 if the measured ozone content is below the ozone content threshold and to supply the aeration tanks 18a, 18b with the vent gas from the supply line 16 and the ozonation tank 12 ; and the by-pass module 22 is arranged to not by-pass the ozone destruction unit 15 (or to allow the vent gas to be destructed by the ozone destruction unit 15) and to supply the aeration tanks 18a, 18b with the treated vent gas, if the measured ozone content is equal or above the ozone content threshold. The by-pass module 22 comprises a set of valves 20a, 20b and 20c arranged to realise the bypass function, as further explained bellow.

The ozone content threshold is preferably 2.5 % wt, and more preferably 1% wt.

The by-pass function can be performed either by a control unit or the by-pass module 22. That is to say that, as examples, the by-pass function can be done thanks to the set of valves of the by-pass module 22, the set of valves being manually or automatically actuated, or by the control unit controlling the shut-down or the running of the ozone destruction unit 15.

That is to say, the by-pass function can be performed by the control unit, which means that the ozone destruction unit 15 can be switched on or switched off in order to destroy or not destroy the ozone in the vent gas according to the measurement of the ozone content in the vent gas, and the comparison to the ozone content threshold.

Alternatively, the by-pass function can be performed by the by-pass module 22, which means that the vent gas is sent to the ozone destruction unit 15 or not sent to the ozone destruction unit 15 according to the measured ozone content in the vent gas and the comparison with the ozone content threshold.

The by-pass module 22 as explained above comprises the set of valves 20a, 20b and 20c arranged to realize the by-pass function.

That is to say, the valve 20a is arranged between the ozonation tank 12 and the ozonation destruction unit 15 so as to cut the vent gas stream or avoiding the vent gas stream to go through the ozone destruction unit 15 when the valve 22a is closed, and to let the vent gas go through the ozonation destruction unit 15 when the valve 20a is open. In other words, the valve 20a is arranged upstream the ozone destruction unit 15.

The valve 20c is arranged in parallel of the ozone destruction unit 15, in order to allow the vent gas to pass through the valve 20c when the valve 20a is closed and the valve 20c is open, in order to bypass the ozone destruction unit 15.

The valve 20b is arranged downstream the ozone destruction unit 15, between the ozone destruction unit 15 and the aeration tanks 18a, 18b, in order to let the vent gas treated by the ozone destruction unit 15 go to the aeration tanks 18a, 18b when the valves 20a and 20b are open (and preferably the valve 20c closed). When the valve 20b is closed and the valve 20c is open, this arrangement avoids any backflow to enter in the ozone destruction unit 15. Of course, the set of valves 20a, 20b, 20c can further comprises a set of check valves to avoid any undesired backflow.

The water treatment system 1 further comprises an oxygen line 17 equipped with a valve for the supply of oxygen from the oxygen source 10 to the aeration tanks 18a, 18b, without passing through the ozone generating unit 11, the ozonation tank 12, the ozone destruction unit 15 and the by-pass module 22. In other words, the oxygen line 17 connects the entry side of the ozone generating unit 11 to the output side of the bypass module 22 and the ozone destruction unit 15, in order to supply directly the aeration tanks 18a, 18b (two tanks 18a, 18b in figure 1).

Alternatively, the oxygen line 17 connects the oxygen source 10 to the entry side of the by-pass module 22 and the destruction unit 15, in order to be mixed with the vent gas upstream the by-pass module 22 and the ozone destruction unit 15.

Oxygen may be supplied from the entry side of the ozone generating unit 11 to the aeration tanks 18a, 18b if the measured oxygen concentration is below the oxygen concentration threshold (which is preferably 60% wt, more preferably 80% wt).

The aeration tanks 18a, 18b are equipped with valves 19a, 19b for connecting the aeration tanks 18a, 18 to the by-pass module 22, the ozone destruction unit 15 and the supply line 16.

The aeration tanks 18a, 18b are also equipped with a set of sensors 21a, 21b, comprising a dissolved oxygen sensor, a redox potential sensor and/or ammonia sensors and/or nitrate sensors, in order to pilot the supply of vent gas or vent gas treated by the ozone destruction unit 15, according to the comparison of measurement to aeration tank dissolved oxygen threshold, redox potential threshold or other operating threshold.

The water treatment system 1 further comprises an atmosphere line 23 arranged between the ozone destruction unit 15 and the aeration tanks 18a, 18b.

When there is no need of vent gas injection in the aeration tanks 18a, 18b, due to customer request or biological demand, the vent gas is treated by the ozone destruction unit 15, by destructing the ozone content in the vent gas, and the treated vent gas is sent to the atmosphere so as to not disturb the biological behaviour in the aeration tanks 18a, 18b for the treatment of water inside the aeration tanks 18a, 18b.

The water treatment system 1 further comprises an aeration device 24 for the direct supply of air comprising oxygen in the aeration tanks 18a, 18b.

Air comprising oxygen may be supplied from the aeration device 24 to the aeration tanks 18a, 18b if the measured oxygen concentration is above the oxygen concentration threshold.

Thus, in summary, the method exemplified relates to the supply of oxygen to the aeration tanks 18a, 18b of the water treatment 1, and comprises:
- a step of injecting gas comprising ozone into the ozonation tank 12, the gas comprising ozone being generated by the ozone generating unit 11,
- a step of collecting the vent gas from the ozonation tank 12 thanks to the top cover (and pipe works),
- a step of measuring the ozone content in the vent gas thanks to the ozone sensor 13 arranged between the ozonation tank 12 and the aeration tanks 18a, 18b, and
- a step of comparing the measured ozone content to the ozone content threshold which is preferably 2.5 % wt and more preferably 1% wt, and of
- supplying the aeration tanks 18a, 18b directly with the vent gas if the measured ozone content is below the ozone content threshold, or
- treating the vent gas so as to decrease its ozone content , if the measured ozone content is equal or above the ozone content threshold, and supplying the aeration tanks 18a, 18b with the treated gas.

The step of treating the vent gas so as to decrease its ozone content may be performed with :
- a step of bypassing the ozone destructing unit 15 if the measured ozone content is below the ozone content threshold, or
- a step of passing the vent gas through the ozone destructing unit 15, if the measured ozone content is equal or above the ozone content threshold.

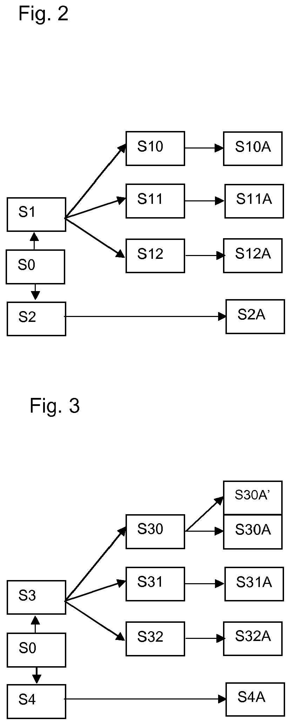

Figure 2 represents steps of the method for supplying oxygen into the aeration tank according to the second embodiment in a continuous aeration mode.

In figure 2, the piloting of the water treatment system is the following.

The water treatment system 1 is piloted in a continuous aeration mode.

In a first case, the vent gas supply is below the oxygen needed by the one or both of the aeration tanks 18a, 18b, or aeration oxygen threshold (which is a mass flow or a quantity of oxygen needed by the aeration tank 18a, 18b). In other words, one or both of the aeration tanks 18a, 18b require more oxygen than currently supplied to, for the correct or desired water treatment. That is to say, the steps apply to one or both of the aeration tanks 18a, 18b, in particular for the figures 2 to 5. The switching can be easily done to the first aeration tank 18a, the second aeration tank 18 or both aeration tanks 18a, 18 thanks to valves 19a, 19b, manually or automatically.

A step, corresponding to the verification whether the ozonation tank is being supplied with a gas or not, meaning verifying if the ozonation tank 12 is currently treating water with ozone received from the ozone generating unit 11, is represented with box number S0.

If the answer to the verification of the step represented with box numbered S0 and corresponding to the verification whether the ozonation tank is being supplied with a gas or not, is YES (represented with box numbered S1 on figure 2), there are three alternative steps, represented with boxes numbered S10, S11 and S12.

A step, corresponding to the verification that the measured dissolved oxygen (measured by the dissolved oxygen sensor 21a, 21b of the aeration tanks 18a, 18b) is equal to a dissolved oxygen setpoint or threshold, is represented with box numbered S10. If the result or status of the step, corresponding to the verification that the measured dissolved oxygen is equal to the dissolved oxygen setpoint or threshold, is YES, a (action) step represented with box numbered S10A is performed, corresponding to the injection of the full amount (100%) of the vent gas received from the ozonation tank 12 to the aeration tanks 18a, 18b. Thereby, the aeration tanks 18a, 18b are supplied with oxygen from the supply line 16.

A step, corresponding to the verification that the measured dissolved oxygen is above the dissolved oxygen setpoint or threshold, is represented with box numbered S11. If the result of the step S11, corresponding to the verification that the measured dissolved oxygen is above the dissolved oxygen setpoint or threshold, is YES, a (action) step represented with the box numbered S11A is performed, which is injection of the vent gas is decreased or stopped, and excess of vent gas is sent to ozone destruction unit 15.

A step, corresponding to the verification that the measured dissolved oxygen is below the dissolved oxygen setpoint, is represented with box numbered S12. If the result of the step S12, which corresponds to the verification that the measured dissolved oxygen is below the dissolved oxygen setpoint, is YES, a (action) step represented with box numbered S12A is performed, which is full amount of vent gas is sent to the aeration tank 18a, 18b and air is sent from the aeration device 24 to the aeration tank 18a, 18b as a complementary source of oxygen.

If the answer to the verification of the step S0, corresponding to the verification whether the ozonation tank is being supplied with a gas or not, is NO (represented with box numbered S2 on figure 2), a (action) step represented with box numbered S2A is performed, which is aeration is fully provided by air aeration device 24 and oxygen may be additionally supplied from the oxygen source 10 via the oxygen line 17. In other words, if the ozonation is stopped, aeration is fully provided by air aeration device 24 and oxygen may be additionally supplied from the oxygen source 10 via oxygen line 17.

Figure 3 represents steps of the method for supplying oxygen into the aeration tank according to a third embodiment in a continuous aeration mode.

The water treatment system 1 is piloted in a continuous aeration mode.

In a second case, the vent gas supply is above the oxygen needed by the aeration tank 18a, 18b, or aeration oxygen threshold (which is a mass flow or a quantity of oxygen needed by the aeration tank 18a, 18b). In other words, the aeration tank 18a, 18b requires less oxygen than currently supplied to, for the correct or desired water treatment. The oxygen demand is linked to the request of the customer and/or the biological behaviour of the aeration tank.

The step, represented with box numbered S0, corresponds to the verification whether the ozonation tank is being supplied with a gas or not, meaning verifying if the ozonation tank 12 is currently treating water with ozone received from the ozone generating unit 11.

If the answer to the verification of the step S0, corresponding to the verification whether the ozonation tank is being supplied with a gas or not, is YES (represented with box numbered S3 on figure 3), there are three alternative steps represented with boxes numbered S30, S31 and S32.

A step, corresponding to the verification that the measured dissolved oxygen (measured by the dissolved oxygen sensor 21a, 21b of the aeration tanks 18a, 18b) is equal to the dissolved oxygen setpoint or threshold, is represented with box numbered S30. If the result or status of the step S30, which corresponds to the verification that the measured dissolved oxygen is equal to the dissolved oxygen setpoint or threshold, is YES, a (action) step represented with box numbered S30A, is performed, in which the full amount (100%) of the vent gas received from the ozonation tank 12 is sent to the aeration tanks 18a, 18b. Thereby, the aeration tank 18a, 18b is supplied with oxygen from the supply line 16. Alternatively, if the result or status of the step S30, which corresponds to the verification that the measured dissolved oxygen is equal to the dissolved oxygen setpoint or threshold, is YES, a (action) step represented with the box numbered S30A' is performed, consisting in a further verification that the measured dissolved oxygen is below the dissolved oxygen threshold after a certain waiting time, and if the measured dissolved oxygen is equal or below the dissolved oxygen threshold, the full amount of vent gas is supplied to the aeration tank 18a,18b.

A step, corresponding to the verification that the measured dissolved oxygen is above the dissolved oxygen setpoint or threshold, is represented with box numbered S31. If the status of the step S31, which corresponds to the verification that the measured dissolved oxygen is above the dissolved oxygen setpoint or threshold, is YES, a (action) step represented with box numbered S31A is performed, which is injection of the vent gas is decreased or stopped, and excess of vent gas is sent to the ozone destruction unit 15.

A step, corresponding to the verification that the measured dissolved oxygen is below the dissolved oxygen setpoint, is represented with box numbered S32. If the status of the step S32, which corresponds to the verification that the measured dissolved oxygen is below the dissolved oxygen setpoint, is YES, an (action) step represented with box numbered S32A is performed, which is full amount of vent gas is sent to the aeration tank 18a, 18b and oxygen is sent from the oxygen source 10 to the aeration tank 18a, 18b as a complementary source of oxygen.

A step, corresponding to the verification of the ozonation is stopped, is represented with box numbered S4. If the status of the step S4, which corresponds to the verification of the ozonation is stopped, is YES, a (action) step represented with the box numbered S4A is performed, which is supplied from the oxygen source 10 via the oxygen line 17.

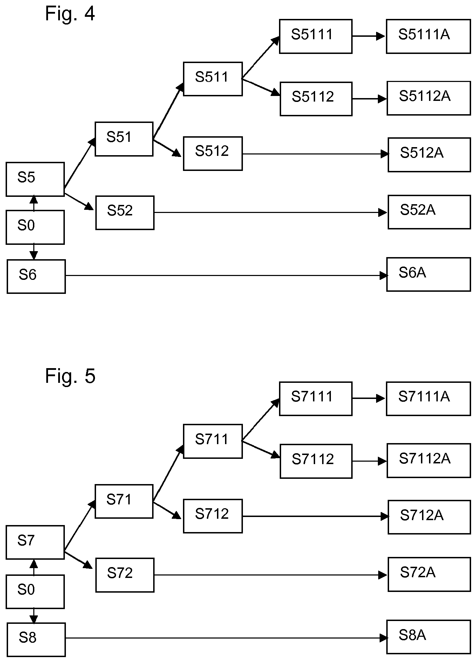

Figure 4 represents steps of the method for supplying oxygen into the aeration tank according to a fourth embodiment in a intermittent aeration mode.

The water treatment system 1 is piloted in a intermittent aeration mode.

The water treatment system 1 further comprises blowers installed in the aeration tanks 18a, 18b, in order to agitate the water inside the aeration tank 18a, 18b and to bring oxygen inside the aeration tanks 18a, 18b.

In a third case, the vent gas supply is below the oxygen needed by the aeration tank 18a, 18b, or aeration oxygen threshold (which is a mass flow or a quantity of oxygen needed by the aeration tank 18a, 18b). In other words, the aeration tank 18a, 18b requires more oxygen than currently supplied to, for the correct or desired water treatment.

The box numbered S0 represents the step corresponding to the verification whether the ozonation tank is being supplied with a gas or not, meaning verifying if the ozonation tank 12 is currently treating water with ozone received from the ozone generating unit 11.

If the answer to the verification of the step S0, corresponding to the verification whether the ozonation tank is being supplied with a gas or not, is YES (represented with box numbered S5 on figure 4), there are two alternative steps, represented by boxes numbered S51 and S52.

A step, corresponding to the verification that the aeration in ON, is represented with box numbered S51. It means that the aeration or supply of vent gas or oxygen or air of one of the aeration tanks 18a, 18b for which the steps are performed, is ON or desired.

If the result or status of the step S51, which corresponds to the verification that the aeration in ON, is YES, there is two alternative steps, represented with boxes numbered S511 and S512.

A step, corresponding to the verification that the measured dissolved oxygen is below the dissolved oxygen setpoint or threshold, is represented by box numbered S511. If the status of the step S511, which corresponds to the verification that the measured dissolved oxygen is below the dissolved oxygen setpoint or threshold, is YES, there is two alternative steps represented with box numbered S5111 and S5112.

A step, corresponding to the verification that the time running from a starting point (for example start of treatment in the aeration tank 18a, 18b) is below a time threshold, is represented with box numbered S5111.

If it is below the time threshold, a (action) step represented with box numbered S5111A is performed, which is start-up of the full injection (100%) of vent gas to the aeration tank 18a, 18b.

A step, corresponding to the verification that the time running from the starting point is above the time threshold, is represented with box numbered S5112.

If it is above the time threshold, a (action) step represented with box numbered S5112A is performed, which is the full injection (100%) of vent gas to the aeration tank 18a, 18b, and the aeration of the aeration tank 18a, 18b with the aeration device 24.

A step, corresponding to the verification that the measured dissolved oxygen is equal or above the dissolved oxygen setpoint or threshold, is represented with box numbered S512. If the status of the step S512, which corresponds to the verification that the measured dissolved oxygen is equal or above the dissolved oxygen setpoint or threshold, is YES, a (action) step represented with box numbered S512A is performed, which is injection of vent gas to the aeration tank 18a, 18b, with excess of vent gas sent to the ozone destruction unit 15, activation of blowers in the aeration tank 18a, 18b and adjustment to the desired dissolved oxygen.

A step, corresponding to the verification that the aeration in OFF, is represented by box numbered S52. It means that the aeration or supply of vent gas or oxygen or air of one of the aeration tanks 18a, 18b for which the steps are proceed, is OFF or not desired.

If the status of the step S52, which corresponds to the verification that the aeration in OFF, is YES, a (action) step represented with box numbered S52A is performed, which is blowers are shut-down and injection of vent gas is shifted to another aeration tank 18a, 18b that needs to be aerated.

A step, corresponding to the verification of the ozonation is stopped, is represented with box numbered S6.. If the ozonation is stopped, a (action) step represented with box numbered S6A is performed, which is aeration is fully provided by from the oxygen source 10 via the oxygen line 17.

Figure 5 represents steps of the method for supplying oxygen into the aeration tank according to the fifth embodiment in a intermittent aeration mode.

The water treatment system 1 is piloted in a intermittent aeration mode.

The water treatment system 1 further comprises blowers installed in the aeration tanks 18a, 18b, in order to agitate the water inside the aeration tank 18a, 18b.

In a fourth case, the vent gas supply is above the oxygen needed by the aeration tank 18a, 18b, or aeration oxygen threshold (which is a mass flow or a quantity of oxygen needed by the aeration tank 18a, 18b). In other words, the aeration tank 18a, 18b requires less oxygen than currently supplied to, for the correct or desired water treatment.

The step, represented with box numbered S0, corresponds to the verification whether the ozonation tank is being supplied with a gas or not, meaning verifying if the ozonation tank 12 is currently treating water with ozone received from the ozone generating unit 11.

If the answer to the verification of the step S0, corresponding to the verification whether the ozonation tank is being supplied with a gas or not, is YES (represented with box numbered S7 on figure 5), there are two alternative steps, represented with boxes numbered S71 and S72.

A step, corresponding to the verification that the aeration in ON, is represented with box numbered S71, It means that the aeration or supply of oxygen or air of one of the aeration tanks 18a, 18b for which the steps are performed, is ON or desired.

If the result or status of the step S71, which corresponds to the verification that the aeration in ON, is YES, there is two alternative steps, represented with box numbered S711 and S712.

A step, corresponding to the verification that the measured dissolved oxygen is below the dissolved oxygen setpoint or threshold, is represented with box numbered S711. If the result or status of the step S711, which corresponds to the verification that the measured dissolved oxygen is below the dissolved oxygen setpoint or threshold, is YES, there is two alternative steps represented with boxes numbered S7111 and S7112.

A step, corresponding to the verification that the time running from a starting point (for example start of treatment in the aeration tank 18a, 18b) is below a second time threshold, is represented with box numbered S7111.

If it is below the second time threshold, a (action) step represented with box numbered S7111A is performed, which is start-up of the full injection (100%) of vent gas to the aeration tank 18a, 18b.

A step, corresponding to the verification that the time running from the starting point is above the second time threshold, is represented with box numbered S7112. If it is above the second time threshold, a (action) step represented with box numbered S7112A is performed, which is the full injection (100%) of vent gas to the aeration tank 18a, 18b, and the aeration of the aeration tank 18a, 18b with the aeration device 24.

A step, corresponding to the verification that the measured dissolved oxygen is equal or above the dissolved oxygen setpoint or threshold, is represented with box numbered S712.

If the result or status of the step S712, which corresponds to the verification that the measured dissolved oxygen is equal or above the dissolved oxygen setpoint or threshold, is YES, a (action) step represented with box numbered S712A is performed, which is injection of vent gas to the aeration tank 18a, 18b, with excess of vent gas sent to the ozone destruction unit 15, activation of blowers in the aeration tank 18a, 18b and adjustment to the desired dissolved oxygen.

A step, corresponding to the verification that the aeration in OFF, is represented with box numbered S72. It means that the aeration or supply of vent gas or oxygen or air of one of the aeration tanks 18a, 18b for which the steps are performed, is OFF or not desired.

If the status of the step S72, which corresponds to the verification that the aeration in OFF, is YES, a (action) step represented with box number S72A is performed, which is blowers are shut-down and injection of vent gas is shifted to another aeration tank 18a, 18b of the aeration tanks 18a, 18b that needs to be aerated.

A step, corresponding to the verification of the ozonation is stopped, is represented with box numbered S8. If the status of the step S8, which corresponds to the verification of the ozonation is stopped, is YES, a (action) step represented with box numbered S8A is performed, which is aeration is fully provided from the oxygen source 10 via the oxygen line 17 or aeration device 24.

It is of course understood that obvious improvements and/or modifications for one skilled in the art may be implemented, still being under the scope of the invention as it is defined by the appended claims.

In particular, it is referred to the combination of all the steps of the method for supplying oxygen to the aeration tank of the water treatment system.

Further, it is of course understood that the steps can apply to one or the other of the aerations tanks, or both simultaneously. In addition, the water system may comprise more than two aeration tanks 18a, 18b.

## Claims

1. Method for supplying oxygen to at least one aeration tank (18a, 18b) of a water treatment system (1), comprising:
- a step of injecting a gas comprising ozone into an ozonation tank (12),
- a step of collecting a vent gas from the ozonation tank (12),
- a step of measuring an ozone content in the vent gas, and
- a step of comparing the measured ozone content to an ozone content threshold, and of:
- supplying the at least one aeration tank (18a, 18b) directly with the vent gas if the measured ozone content is below the ozone content threshold, or
- treating the vent gas so as to decrease its ozone content, if the measured ozone content is equal or above the ozone content threshold, and supplying the at least one aeration tank (18a, 18b) with the treated gas.

2. Method according to the preceding claim, further comprising:
- a step of bypassing an ozone destruction unit (15) for destructing ozone in the vent gas, if the measured ozone content is below the ozone content threshold, or
- a step of passing the vent gas through the ozone destruction unit (15), if the measured ozone content is equal or above the ozone content threshold.

3. Method according to the preceding claim, further comprising :
- a step of measuring an oxygen concentration in the vent gas,
- a step of comparing the measured oxygen concentration to an oxygen concentration threshold, which is preferably 60% wt and more preferably 80% wt,
- a step of supplying oxygen from an oxygen source (10) to the at least one aeration tank (18a, 18b), if the measured oxygen concentration is below the oxygen concentration threshold, or
- a step of supplying air from an aeration device (24) to the aeration tank (18a, 18b), if the measured oxygen concentration is above the oxygen concentration threshold.

4. Method according to any one of the preceding claims, wherein the ozone content threshold is 2.5 % wt, and preferably 1% wt.

5. Method according to any one of the preceding claims, further comprising:
- a step of measuring a dissolved oxygen content in a liquid of the aeration tank (18a, 18b), and
- a step of stopping the supply of the vent gas to the aeration tank (18a, 18b), if the measured dissolved oxygen content is above a dissolved oxygen threshold.

6. Method according to any one of the claims 2 to 4, further comprising :
- a step of supplying the vent gas from a by-pass module (22) to the aeration tank (18a, 18b) if a measured dissolved oxygen content is below an dissolved oxygen threshold, and
- a step of supplying oxygen from an entry side of the ozone generating unit (11) to the by-pass module (22), if the measured dissolved oxygen content is below the dissolved oxygen threshold, or
- a step of supplying air from an aeration device (24) to the aeration tank, if the measured dissolved oxygen content is below the dissolved oxygen threshold.

7. Method according to any one of the claims 5 to 6, wherein the dissolved oxygen threshold is 6 mg/L during more than 2 hours preferably 5 mg/L during more than 2 days.

8. A water treatment system comprising:
- at least one aeration tank (18a, 18b),
- an ozone generating unit (11), for generating a gas comprising at least ozone,
- an ozonation tank (12) supplied with the gas generated by the ozone generating unit (11), the ozonation tank (12) being arranged to output a vent gas,
- a supply line (16) arranged between the ozonation tank (12) and the at least one aeration tank (18a, 18b), for supplying the vent gas to be supplied to the at least one aeration tank (18a, 18b),
- at least one set of sensors, comprising at least one ozone sensor (13) in order to measure an ozone content in the vent gas,
- an ozone destruction unit (15) arranged on the supply line (16) for treating the vent gas received from the ozonation tank (12) so as to decrease the ozone content of the vent gas by destructing ozone, wherein the ozone sensor (13) is arranged on the supply line (16) between the ozonation tank (12) and the ozone destruction unit (15),
wherein the water treatment system further comprises:
- a control unit arranged to switch on the ozone destruction unit (15) in order to destroy the ozone in the vent gas before its supply to the at least one aeration tank (18a, 19a) if the ozone sensor (13) measures an ozone content in vent gas equal or above an ozone content threshold, or to switch off the ozone destruction unit (15) in order to not destroy the ozone in the vent gas before its supply to the at least one aeration tank (18a, 18b) if the ozone sensor (13) measures an ozone content in vent gas below the ozone content threshold, or
- a bypass module (22) arranged on the supply line (16) downstream the ozonation tank (12) and the ozone sensor (13) and upstream the at least one aeration tank (18a, 18b), wherein if the measured ozone content is below the ozone content threshold, the bypass module (22) is arranged to bypass the ozone destruction unit (15) and to supply the at least one aeration tank (18a, 18b) with the vent gas from the supply line (16) and the ozonation tank (12), and wherein, if the measured ozone content is equal or above the ozone content threshold, the bypass module (22) is arranged to not bypass the ozone destruction unit (15), so as to allow the vent gas to be destructed by the ozone destruction unit (15) and to supply the at least one aeration tank (18a, 18b) with the treated vent gas,
the bypass module (22) comprising a set of valves (20a, 20b 20c) arranged to realise the bypass function, said set of valves (20a, 20b, 20c) being manually or automatically actuated.

9. The water treatment system according to the preceding claim, further comprising :
- an aeration device (24),
the set of sensors further comprising at least:
- one oxygen sensor (14) in order to measure an oxygen content in the vent gas and arranged on the supply line (16) between the ozonation tank (12) and the ozone destruction unit (15), or
- one dissolved oxygen sensor (21a, 21b), the at least one aeration tank (18a, 18b) being equipped with said dissolved oxygen sensor (21a, 21b), or
- one redox potential sensor, the at least one aeration tank (18a, 18b) being equipped with said redox potential sensor (21a, 21b), or
- one mass flow sensor for measuring a mass flow of ozone or oxygen in the vent gas received from the ozonation tank (12).

## Patentansprüche

1. Verfahren zum Zuführen von Sauerstoff zu mindestens einem Belüftungstank (18a, 18b) eines Wasseraufbereitungssystems (1), mit:
- einem Schritt des Injizierens eines Ozon enthaltenden Gases in einen Ozonierungstank (12),
- einem Schritt des Sammelns eines Abgases aus dem Ozonierungstank (12),
- einem Schritt des Messens eines Ozongehalts in dem Abgas, und
- einem Schritt des Vergleichens des gemessenen Ozongehalts mit einem Ozongehaltschwellenwert, und
- des unmittelbar Speisens des mindestens einen Belüftungstanks (18a, 18b) mit dem Abgas, wenn der gemessene Ozongehalt unter dem Ozongehaltschwellenwert liegt, oder
- des Behandelns des Abgases, um dessen Ozongehalt zu reduzieren, wenn der gemessene Ozongehalt gleich oder höher als der Ozongehaltschwellenwert ist, und Speisen des mindestens einen Belebungstanks (18a, 18b) mit dem behandelten Gas.

2. Verfahren nach dem vorangehenden Anspruch, ferner mit:
- einem Schritt des Umgehens einer Ozonzerstörungseinheit (15) zum Zerstören von Ozon in dem Abgas, wenn der gemessene Ozongehalt unter dem Ozongehaltschwellenwert liegt, oder
- einem Schritt des Leitens des Abgases durch die Ozonzerstörungseinheit (15), wenn der gemessene Ozongehalt gleich oder höher als der Ozongehaltschwellenwert ist.

3. Verfahren nach dem vorangehenden Anspruch, ferner mit:
- einem Schritt des Messen einer Sauerstoffkonzentration in dem Abgas,
- einem Schritt des Vergleichens der gemessenen Sauerstoffkonzentration mit einem Sauerstoffkonzentrationsschwellenwert, der vorzugsweise 60 Gewichtsprozent und stärker bevorzugt 80 Gewichtsprozent beträgt,
- einem Schritt des Zuführens von Sauerstoff von einer Sauerstoffquelle (10) zu dem mindestens einen Belüftungstank (18a, 18b), wenn die gemessene Sauerstoffkonzentration unter dem Sauerstoffkonzentrationsschwellenwert liegt, oder
- einem Schritt des Zuführens von Luft von einer Belüftungsvorrichtung (24) zu dem Belebungsbecken (18a, 18b), wenn die gemessene Sauerstoffkonzentration über dem Sauerstoffkonzentrationsschwellenwert liegt.

4. Verfahren nach einem der vorhergehenden Ansprüche, bei welchem der Ozongehaltschwellenwert 2,5 Gewichtsprozent und vorzugsweise 1 Gewichtsprozent beträgt.

5. Verfahren nach einem der vorhergehenden Ansprüche, ferner mit:
- einem Schritt des Messens eines Gehalts an gelöstem Sauerstoff in einer Flüssigkeit des Belüftungstanks (18a, 18b), und
- einem Schritt des Stoppens der Zufuhr des Abgases zu dem Belüftungstank (18a, 18b), wenn der gemessene Gehalt an gelöstem Sauerstoff über einem Schwellenwert für gelösten Sauerstoff liegt.

6. Verfahren nach einem der Ansprüche 2 bis 4, ferner mit:
- einem Schritt des Zuführens des Abgases von einem Bypassmodul (22) zum Belüftungstank (18a, 18b), wenn ein gemessener Gehalt an gelöstem Sauerstoff unter einem Schwellenwert für gelösten Sauerstoff liegt, und
- einem Schritt des Zuführens von Sauerstoff aus einer Einlassseite einer Ozonerzeugungseinheit (11) zu dem Bypassmodul (22), wenn der gemessene Gehalt an gelöstem Sauerstoff unter einem Schwellenwert für gelösten Sauerstoff liegt, oder
- einem Schritt des Zuführens von Luft von einer Belüftungsvorrichtung (24) zu dem Belüftungstank, wenn der gemessene Gehalt an gelöstem Sauerstoff unter einem Schwellenwert für gelösten Sauerstoff liegt.

7. Verfahren nach einem der Ansprüche 5 bis 6, bei welchem der Schwellenwert für gelösten Sauerstoff 6 mg/l während mehr als 2 Stunden, vorzugsweise 5 mg/l während mehr als 2 Tage beträgt.

8. Wasseraufbereitungssystem mit:
- mindestens einem Belüftungstank (18a, 18b),
- einer Ozonerzeugungseinheit (11) zum Erzeugen eines zumindest Ozon aufweisenden Gases,
- einem Ozonierungstank (12), der mit dem von der Ozonerzeugungseinheit (11) erzeugten Gas gespeist wird, wobei der Ozonierungstank (12) zum Ausgeben eines Abgases angeordnet ist,
- einer zwischen dem Ozonierungstank (12) und dem mindestens einen Belüftungstank (18a, 18b) angeordneten Zufuhrleitung (16) zum Zuführen des dem mindestens einen Belüftungstank (18a, 18b) zuzuführenden Abgases,
- mindestens einer Gruppe von Sensoren, die mindestens einen Ozonsensor (13) aufweist, um einen Ozongehalt in dem Abgas zu messen,
- einer an der Zufuhrleitung (16) angeordneten Ozonzerstörungseinheit (15) zum Behandeln des aus dem Ozonierungstank (12) erhaltenen Abgases, um den Ozongehalt des Abgases durch das Zerstören von Ozon zu verringern, wobei der Ozonsensor (13) an der Zufuhrleitung (16) zwischen dem Ozonierungstank (12) und der Ozonzerstörungseinheit (15) angeordnet ist, wobei das Wasseraufbereitungssystem ferner aufweist:
- eine Steuereinheit, die angeordnet ist, um die Ozonzerstörungseinheit (15) einzuschalten, um das Ozon in dem Abgas vor dessen Zufuhr zu dem mindestens einen Belüftungstank (18a, 18b) zu zerstören, wenn der Ozonsensor (13) einen Ozongehalt in dem Abgas misst, der gleich oder höher als ein Ozongehaltschwellenwert ist, oder um die Ozonzerstörungseinheit (15) abzuschalten, um das Ozon in dem Abgas vor dessen Zufuhr zu dem mindestens einen Belüftungstank (18a, 18b) nicht zu zerstören, wenn der Ozonsensor (13) einen Ozongehalt in dem Abgas misst, der unter dem Ozongehaltschwellenwert liegt, oder
- ein Bypassmodul (22), das an der Zufuhrleitung (16) stromabwärts des Ozonierungstanks (12) und des Ozonsensors (13) und stromaufwärts des mindestens einen Belüftungstanks (18a, 18b) angeordnet ist, wobei, wenn der gemessene Ozongehalt unter dem Ozongehaltschwellenwert liegt, das Bypassmodul (22) angeordnet ist, um die Ozonzerstörungseinheit (15) zu umgehen und das mindestens eine Belüftungstank (18a, 18b) mit dem Abgas aus der Zufuhrleitung (16) und dem Ozonierungstank (12) zu speisen, und wobei, wenn der gemessene Ozongehalt gleich oder höher als der Ozongehaltschwellenwert ist, das Bypassmodul (22) angeordnet ist, um die Ozonzerstörungseinheit (15) nicht zu umgehen, um das Zerstören des Abgases durch die Ozonzerstörungseinheit (15) zu ermöglichen und das mindestens eine Belüftungstank (18a, 18b) mit dem behandelten Abgas zu speisen,
wobei das Bypassmodul (22) eine Gruppe von Ventilen (20a, 20b, 20c) aufweist, die dazu angeordnet sind, die Bypassfunktion zu realisieren, wobei die Gruppe von Ventilen (20a, 20b, 20c) manuell oder automatisch betätigt wird.

9. Wasseraufbereitungssystem nach dem vorhergehenden Anspruch, ferner mit:
- einer Belüftungsvorrichtung (24),
wobei die Gruppe von Sensoren ferner mindestens aufweist:
- einen Sauerstoffsensor (14), der zu Messen eines Sauerstoffgehalts in dem Abgas vorgesehen ist und an der Zufuhrleitung (16) zwischen dem Ozonierungstank (12) und der Ozonzerstörungseinheit (15) angeordnet ist, oder
- einen Sensor (21a, 21b) für gelösten Sauerstoff, wobei das mindestens einen Belüftungstank (18a, 18b) mit dem Sensor (21a, 21b) für gelösten Sauerstoff versehen ist, oder
- einen Redoxpotentialsensor, wobei das mindestens einen Belüftungstank (18a, 18b) mit dem Redoxpotentialsensor (21a, 21b) versehen ist, oder
- einen Massendurchflusssensor zum Messen eines Massendurchflusses von Ozon oder Sauerstoff in dem aus dem Ozonierungstank (12) erhaltenen Abgas.

## Revendications

1. Procédé d'alimentation en oxygène d'au moins un réservoir d'aération (18a, 18b) d'un système de traitement d'eau (1), comprenant :
- une étape d'injection d'un gaz comprenant de l'ozone dans un réservoir d'ozonation (12),
- une étape de collecte d'un gaz d'échappement depuis le réservoir d'ozonation (12),
- une étape de mesure de la teneur en ozone dans le gaz d'échappement, et
- une étape de comparaison de la teneur en ozone mesurée par rapport à un seuil de teneur en ozone, et
∘ d'alimentation du au moins un réservoir d'aération (18a, 18b) directement avec le gaz d'échappement si la teneur en ozone mesurée est au-dessous du seuil de teneur en ozone, ou
∘ de traitement du gaz d'échappement de manière à diminuer sa teneur en ozone si la teneur en ozone mesurée est égale ou au-dessus du seuil de teneur en ozone, et d'alimentation de l'au moins un réservoir d'aération (18a, 18b) avec le gaz traité.

2. Procédé selon la revendication précédente, comprenant en outre :
- une étape de contournement d'une unité de destruction d'ozone (15) pour détruire l'ozone dans le gaz d'échappement, si la teneur en ozone mesurée est au-dessous du seuil de teneur en ozone, ou
- une étape de passage du gaz d'échappement au-travers de l'unité de destruction d'ozone (15), si la teneur en ozone mesurée est égale ou au-dessus du seuil de teneur en ozone.

3. Procédé selon la revendication précédente, comprenant en outre :
- une étape de mesure d'une concentration en oxygène dans le gaz d'échappement,
- une étape de comparaison de la concentration en oxygène mesurée avec un seuil de concentration en oxygène, qui est de référence 60% en poids et de manière plus préférée 80% en poids,
- une étape d'alimentation en oxygène depuis une source d'oxygène (10) vers le au moins réservoir d'aération (18a, 18b) si la concentration en oxygène mesurée est au-dessous du seuil de concentration en oxygène, ou
- une étape d'alimentation en air depuis un dispositif d'aération (24) vers le réservoir d'aération (18a, 18b) si la concentration en oxygène mesurée est au-dessus du seuil de concentration en oxygène.

4. Procédé selon l'une quelconque des revendications précédentes, dans lequel le seuil de la teneur en ozone est de 2,5 % en poids, et de préférence, 1% en poids.

5. Procédé selon l'une quelconque des revendications précédentes, comprenant en outre :
- une étape de mesure d'une teneur en oxygène dissous dans un liquide du réservoir d'aération (18a, 18b), et
- une étape d'arrêt de l'alimentation du gaz d'échappement au réservoir d'aération (18a, 18b), si la teneur en oxygène dissous mesurée est au-dessus d'un seuil d'oxygène dissous.

6. Procédé selon l'une quelconque des revendications 2 à 4, comprenant en outre :
- une étape d'alimentation en gaz d'échappement depuis un module de contournement (22) vers le réservoir d'aération (18a, 18b) si une teneur en oxygène dissous mesurée est au-dessous d'un seuil d'oxygène dissous, et
∘ une étape d'alimentation en oxygène depuis un côté d'entrée de l'unité de génération d'ozone (11) vers le module de contournement (22), si la teneur en oxygène dissous mesurée est au-dessous du seuil d'oxygène dissous, ou
∘ une étape d'alimentation en air depuis un dispositif d'aération (24) vers le réservoir d'aération, si la teneur en oxygène dissous mesurée est au-dessous du seuil d'oxygène dissous.

7. Procédé selon l'une quelconque des revendications 5 à 6, dans lequel le seuil d'oxygène dissous est 6 mg/L durant plus de 2 heures, de préférence 5 mg/L durant plus de 2 jours.

8. Système de traitement d'eau comprenant :
- au moins un réservoir d'aération (18a, 18b),
- une unité de génération d'ozone (11) pour générer un gaz comprenant au moins de l'ozone,
- un réservoir d'ozonation (12) alimenté avec le gaz généré par l'unité de génération d'ozone (11), le réservoir d'ozonation (12) étant agencé pour émettre un gaz d'échappement,
- une ligne d'alimentation (16) agencée entre le réservoir d'ozonation (12) et le au moins un réservoir d'aération (18a, 18b), pour amener le gaz d'échappement devant être amené à l'au moins un réservoir d'aération (18a, 18b),
- au moins un jeu de capteurs, comprenant au moins un capteur d'ozone (13) afin de mesurer une teneur en ozone dans le gaz d'échappement,
- une unité de destruction d'ozone (15) agencée sur la ligne d'alimentation (16) pour traiter le gaz d'échappement reçu depuis le réservoir d'ozonation (12) de manière à diminuer la teneur en ozone du gaz d'échappement en détruisant l'ozone, dans lequel le capteur d'ozone (13) est agencé sur la ligne d'alimentation (16) entre le réservoir d'ozonation (12) et l'unité de destruction d'ozone (15),
dans lequel le système de traitement d'eau comprend en outre :
- une unité de commande agencée pour allumer l'unité de destruction d'ozone (15) afin de détruire l'ozone dans le gaz d'échappement avant son amenée à l'au moins un réservoir d'aération (18a, 18b) si le capteur d'ozone (13) mesure une teneur en ozone dans le gaz d'échappement égale ou au-dessus d'un seuil de teneur en ozone, ou pour éteindre l'unité de destruction d'ozone (15) afin de ne pas détruire l'ozone dans le gaz d'échappement avant son alimentation à l'au moins un réservoir d'aération (18a, 18b) si le capteur d'ozone (13) mesure une teneur en ozone dans le gaz d'échappement en-dessous du seuil de teneur en ozone, ou
un module de contournement (22) agencé sur la ligne d'alimentation (16) en aval du réservoir d'ozonation (12) et du capteur d'ozone (13) et en amont de l'au moins un réservoir d'aération (18a, 18b), dans lequel si la teneur en ozone mesurée est au-dessous du seuil de teneur en ozone, le module de contournement (22) est agencé pour contourner l'unité de destruction d'ozone (15) et pour alimenter le au moins réservoir d'aération (18a, 18b) à partir de la ligne d'alimentation (16) et le réservoir d'ozonation (12), dans lequel, si la teneur en ozone mesurée est égale ou au-dessus du seuil de teneur en ozone, le module de contournement (22 est agencé pour ne pas contourner l'unité de destruction d'ozone (15), de manière à permettre au gaz d'échappement d'être détruit par l'unité de destruction d'ozone (15) et pour alimenter le au moins un réservoir d'aération (18a, 18b) avec le gaz d'échappement traité,
le module de contournement (22) comprenant un jeu de valves (20a, 20b, 20c) agencé pour réaliser la fonction de contournement, ledit jeu de valves (20a, 20b, 20c) étant manuellement ou automatiquement actionné.

9. Système de traitement d'eau selon la revendication précédente comprenant en outre,
- un dispositif d'aération (24),
le jeu de capteurs comprenant en outre au moins :
- un capteur d'oxygène (14) afin de mesurer une teneur en oxygène dans le gaz d'échappement et agencé sur la ligne d'alimentation (16) entre le réservoir d'ozonation (12) et l'unité de destructions d'ozone (15), ou
- un capteur d'oxygène dissous (21a, 21b), le au moins réservoir d'aération (18a, 18b) étant équipé dudit capteur d'oxygène dissous (21a, 21b), ou
- un capteur de potentiel redox, le au moins un réservoir d'aération (18a, 18b) étant équipé dudit capteur de potentiel redox (21a, 21b), ou
- un capteur de débit massique pour mesurer un débit massique d'ozone ou d'oxygène dans le gaz d'échappement reçu par le réservoir d'ozonation (12).
